# Europäisches Patentamt

## European Patent Office

## Office européen des brevets

(19)

(11) Veröffentlichungsnummer: **0 251 243**
**B1**

(12) **EUROPÄISCHE PATENTSCHRIFT**

(45) Veröffentlichungstag der Patentschrift:
27.09.89

(51) Int. Cl.⁴: **F16H 55/14**

(21) Anmeldenummer: **87109217.7**

(22) Anmeldetag: **26.06.87**

(54) **Einteiliges Getrieberad.**

(30) Priorität: **01.07.86 DE 3622047**

(43) Veröffentlichungstag der Anmeldung:
**07.01.88 Patentblatt 88/1**

(45) Bekanntmachung des Hinweises auf die Patenterteilung:
**27.09.89 Patentblatt 89/39**

(84) Benannte Vertragsstaaten:
**DE ES FR GB IT SE**

(56) Entgegenhaltungen:
**WO-A-81/00143**
**AT-B- 172 233**
**DE-A- 3 141 101**
**DE-U- 8 501 367**

(73) Patentinhaber: **Bayerische Motoren Werke Aktiengesellschaft, Patentabteilung AJ-3 Postfach 40 02 40 Petuelring 130, D-8000 München 40(DE)**

(72) Erfinder: **Neugebauer, Dietmar, Tschaikowskystrasse 1, D-8000 München 60(DE)**
Erfinder: **Heitmann, Jörn, Dr. Mach Strasse 66, D-8013 Haar(DE)**

(74) Vertreter: **Bücken, Helmut, Bayerische Motoren Werke Aktiengesellschaft Postfach 40 02 40 Petuelring 130 - AJ-30, D-8000 München 40(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Die Erfindung bezieht sich auf ein Getrieberad, insbesondere ein Schwungrad, der im Oberbegriff des ersten Anspruchs angegebenen Art und geht aus von der gattungsbildenden DE-U 8 501 367.

Schwungräder, insbesondere an Brennkraftmaschinen für Kraftfahrzeuge, sind oftmals an ihrem äußeren Umfang mit einer Verzahnung versehen, welche beim Startvorgang mit dem Ritzel eines Anlassers kämmt. Diese Verzahnung wird entweder in Form eines separaten Zahnkranzes auf das Schwungrad aufgebracht, oder direkt in das Schwungrad eingearbeitet.

In einem bekannten, äußerst einfachen Fertigungsverfahren wird die Verzahnung durch Hämmern auf einen am äußeren Umfang eines einteiligen Blechschwungrades abgewinkelt angeordneten Bördel aufgebracht.

Die vorliegende Erfindung bezieht sich in erster Linie auf derartig hergestellte Schwungräder, ist aber in ihrer Wirkung nicht auf Schwungräder begrenzt, sondern generell auf Getrieberäder anwendbar, deren Verzahnung in der oben geschilderten Weise gefertigt wird.

Die Kämmbewegung der Zähne von Getrieberädern erzeugt Geräusche, welche bereits bei spanabhebend gefertigten Verzahnungen unerwünscht laut sein können, an Zahnprofilen tritt dieses Geräuschproblem jedoch deutlich verstärkt auf.

Möglichkeiten zur Geräuschdämpfung an Getrieberadpaarungen sind bekannt. Wie in der DE-A 3 023 977 erwähnt, konzentriert sich ein Ansatz hierzu auf die exakte Formgebung der Getriebezähne, während ein zweiter die Verringerung von Fehlern während der Herstellung und Montage zum Gegenstand hat. Diese Maßnahmen sind wegen des Fertigungsaufwandes für ein oben beschriebenes Schwungrad, bei welchem sich die Verzahnungen nur sehr kurzzeitig, nämlich während des Anlaßvorgangs der Brennkraftmaschine im Eingriff befinden, äußerst unwirtschaftlich.

Daneben werden auf die Getrieberäder teilweise schalldämmende Materialien aufgebracht. Die oben genannte beschreibt beispielsweise eine schalldämpfende Anordnung für Getrieberäder, wobei in eine im Getrieberadkörper ringförmig ausgebildete Aussparung unter Zuhilfenahme eines Halteringes ein verformbares Ringelement aus elastomerem Werkstoff eingepreßt ist. Diese Anordnung ist jedoch relativ aufwendig und an einem nicht besonders dick ausgebildeten Blechschwungrad nur bedingt möglich.

Daneben wurde aus der DE-U 8 501 367 ein Getrieberad mit einer aufgebrachten dünnen Scheibe bekannt, wobei sich die Scheibe nicht in den Randbereich des Getrieberades erstreckt. Diese Scheibe ändert somit lediglich das Resonanzspektrum des Getrieberades. Eine wirkungsvolle Geräuschdämpfung in sämtlichen Frequenzbereichen läßt sich hiermit jedoch nicht erzielen.

Aufgabe der vorliegenden Erfindung ist es, für ein oben beschriebenes Getrieberad mit abgewinkeltem, spanlos angeformtem Zahnkranz, eine einfache und wirkungsvolle Geräuschdämpfungsmaßnahme bereitzustellen. Diese Aufgabe wird durch die kennzeichnenden Merkmale des Anspruchs 1 gelöst. Eine nahezu die gesamte Radfläche abdeckende und zugleich unter Vorspannung an der abgewinkelten Innenseite des Zahnkranzes anliegende dünne Scheibe dämpft in einfacher Weise das Geräusch bei der Abwälzbewegung von Anlasserritzel und Schwungradzähnen.

Zwar sind beispielsweise aus der DE-B 2 655 909 gebaute Zahnriemenscheiben aus zwei verformten Blechen bekannt, die in ihrem Aufbau einem erfindungsgemäßen Schwungrad ähnlich sind, dort jedoch hat diese zweite Blechscheibe die Aufgabe, eine zusätzliche mechanische Abstützung im Bereich der Radnabe zu gewährleisten. Folglich ist dort diese zweite Blechscheibe ebenso massiv ausgeführt wie die Zahnriemenscheibe selbst, und erstreckt sich in einer kastenförmigen Ausbildung vom Zahnkranz bis hin zur Radnabe. Die damit erzeugte Resonanzkammer und die Vergrößerung der schallabstrahlenden Fläche könnte die Geräuschemission verstärken, jedoch treten in jener Anordnung keine Geräuschprobleme auf, da hierbei die Zahnriemenscheibe mit einem poly-elastomeren Zahnriemen zusammenwirkt.

Eine noch intensivere Geräuschdämmung wird erreicht, wenn, wie Anspruch 2 beschreibt, zur weiteren Geräuschdämpfung die Hohlräume zwischen den Zahnflanken und der Dämpfungsscheibe beispielsweise mit bekannten Dämpfungspasten ausgefüllt werden.

Eine besonders einfache Verbindungsmöglichkeit zwischen Dämpfungsscheibe und Getrieberad behandelt Anspruch 3. Ist die Scheibe aus Blech gefertigt, so kann sie beispielsweise gepreßt und auf dem Getrieberad mittels Punktschweißung befestigt werden.

Im folgenden wird die Erfindung anhand eines in der Zeichnung dargestellten Ausführungsbeispiels näher beschrieben. Es zeigt:

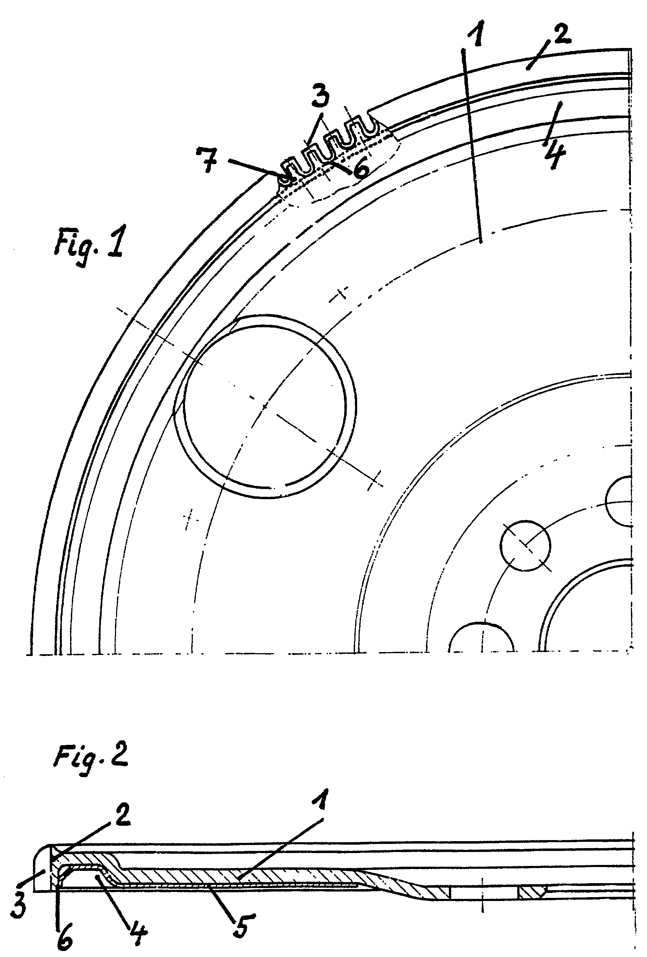

Fig. 1 die Daraufsicht auf ein Segment des erfindungsgemäßen Schwungrads und

Fig. 2 eine geschnittene Darstellung.

Dargestellt und erläutert sind dabei nur die zum Verständnis notwendigen Teile.

Das Getrieberad 1 ist auf seinem am äußeren Umfang abgewinkelt angeordnetem Bördel 2 mit einem Zahnkranz 3 versehen. Zur Getrieberadmitte hin schließt sich an den Bördel 2 eine Ringnut 4 an. Dem Verlauf dieser Ringnut folgt, unter Vorspannung stehend eingesetzt, die einen Großteil der Getrieberadfläche abdeckende und auf dem Getrieberad durch Punktschweißung befestigte Dämpfungsscheibe 5.

Durch die Vorspannung der Dämpfungsscheibe 5 im Bereich der Ringnut wird sichergestellt, daß die Scheibe fest an den in den Fußkreis der Verzahnung mündenden Zahnflanken 6 anliegt. Die Hohlräume 7 zwischen den Zahninnenflächen und der Scheibe 5 können zusätzlich mit einer Dämpfungspaste ausgefüllt sein.

## Patentansprüche

1. Einteiliges Getrieberad (1), insbesondere Schwungrad, mit am äußeren Umfang abgewinkelt angeordnetem spanlos angeformten Zahnkranz (3), wobei auf einer Seitenfläche des Rades (1) eine gegenüber dem Radquerschnitt dünne Scheibe (5) aufgebracht ist, dadurch gekennzeichnet, daß die am äußeren Umfang abgewinkelte Scheibe (5) sich der abgewinkelten Formgebung des Getrieberades (1) anpaßt und an den in den Fußkreis der Verzahnung mündenden Zahnflanken (6) unter Vorspannung fest anliegt.

2. Getrieberad nach Anspruch 1, dadurch gekennzeichnet, daß die Hohlräume (7) zwischen den Zahnflanken des Zahnkranzes und der am Fußkreis der Verzahnung anliegenden Scheibe (5) mit einem Dämpfungsmittel ausgefüllt sind.

3. Getrieberad nach Anspruch 1 oder 2, dadurch gekennzeichnet, daß die Scheibe (5) aus Blech gefertigt und am Getrieberad (1) mittels Schweißung befestigt ist.

## Claims

1. A one-part gearwheel (1), more particularly a flywheel, comprising an angled gear rim (3) formed by machining on its outer periphery, a disc (5) which is thin compared to the wheel cross-section being formed on a side surface of the wheel (1), characterised in that the disc (5), which is angular at its outer periphery, follows the angular shape of the gearwheel (1) and abuts firmly under prestress against the tooth flanks (6) opening into the root circle of the gear-tooth system.

2. A gearwheel according to claim 1, characterised in that a damping means is used to fill the cavities (7) between the flanks of the gear rim and the disc (5) abutting the root circle of the gear-tooth system.

3. A gearwheel according to claim 1 or 2, characterised in that the disc (5) is made of sheet metal and secured to the gearwheel (1) by welding.

## Revendications

1. Roue de transmission monobloc (1) en particulier volant moteur, comportant, à sa périphérie extérieure, une couronne dentée (3) obtenue par usinage sans enlèvement de copeaux et coudée, où sur une face latérale de la roue (1) est rapporté un disque mince contre la section transversale de cette roue, caractérisé en ce que le disque (5) coudé à la périphérie extérieure s'adapte à la forme orientée vers l'extérieur de la roue d'entraînement (1) et est de façon fixe adjacent par précontrainte sur les flancs des dents débouchant sur le cercle de pied de la denture.

2. Roue d'entraînement selon la revendication 1, caractérisée en ce que les cavités (7) entre les flancs des dents de la couronne dentée et le disque (5) se situant sur le cercle de pied de la denture sont remplies par un milieu d'amortissement.

3. Roue d'entraînement selon la revendication 1 ou 2, caractérisée en ce que le disque (5) et fabriqué en tôle et est fixé à la roue d'entraînement (1) par soudure.

EP 0 251 243 B1

Fig. 1

Fig. 2